# EUROPEAN PATENT SPECIFICATION

(11) **EP 3 860 290 B1**
(45) Date of publication and mention of the grant of the patent: **12.11.2025**
(21) Application number: 18934764.4
(22) Date of filing: 27.09.2018
(51) Int. Cl.: H04W 72/23, H04W 72/02

(54) **USER TERMINAL AND WIRELESS COMMUNICATION METHOD**
BENUTZERENDGERÄT UND DRAHTLOSKOMMUNIKATIONSVERFAHREN
TERMINAL UTILISATEUR, ET PROCÉDÉ DE COMMUNICATION SANS FIL

(43) Date of publication of application: 04.08.2021
(73) Proprietor: NTT DOCOMO, INC., Chiyoda-ku Tokyo 100-6150 (JP)
(72) Inventor: TAKEDA, Kazuki, Tokyo 100-6150 (JP); NAGATA, Satoshi, Tokyo 100-6150 (JP); WANG, Lihui, Beijing 100190 (CN); HOU, Xiaolin, Beijing 100190 (CN)
(74) Representative: Hoffmann Eitle
(86) International application number: PCT/JP2018/036097
(87) International publication number: WO 2020/065870

(56) References cited:
- EP-A1- 3 554 118
- WO-A1-2018/129987
- INTEL CORPORATION: "3GPP TSG RAN WG1 Meeting #94; R1-1808707; Enhancements to configured grant PUSCH", vol. RAN WG1, no. Gothenburg, Sweden; 20180820 - 20180824, 11 August 2018 (2018-08-11), XP051516082, Retrieved from the Internet <URL:http://www.3gpp.org/ftp/tsg%5Fran/WG1%5FRL1/TSGR1%5F94/Docs/R1%2D1808707%2Ezip> [retrieved on 20180811]
- NOKIA ET AL: "3GPP TSG RAN WG1 Meeting #94; R1-1808570; On Configured Grant enhancements for NR URLLC", vol. RAN WG1, no. Gothenburg, Sweden; 20180820 - 20180824, 10 August 2018 (2018-08-10), XP051515947, Retrieved from the Internet <URL:http://www.3gpp.org/ftp/tsg%5Fran/WG1%5FRL1/TSGR1%5F94/Docs/R1%2D1808570%2Ezip> [retrieved on 20180810]
- HUAWEI ET AL: "3GPP TSG RAN WG2 Meeting #99bis; R1-1711118; Discussion on UL grant-free", vol. RAN WG2, no. Prague, Czech Republic; 20171009 - 20171013, 8 October 2017 (2017-10-08), XP051343126, Retrieved from the Internet <URL:http://www.3gpp.org/ftp/Meetings_3GPP_SYNC/RAN2/Docs/> [retrieved on 20171008]
- INTEL CORPORATION: "Enhancements to configured grant PUSCH[ online", 3GPP TSG RAN WG1 #94 R1-1808707, 11 August 2018 (2018-08-11), XP051516082, Retrieved from the Internet <URL:http://www.3gpp.org/ftp/tsg_ran/WG1_RL1/TSGR1_94/Docs/R1-1808707.zip>
- NOKIA ET AL.: "On Configured Grant enhancements for NR URLLC[ online", 3GPP TSG RAN WG1 #94 R1-1808570, 10 August 2018 (2018-08-10), XP051515947, Retrieved from the Internet <URL:http://www.3gpp.org/ftp/tsg_ran/WG1_RL1/TSGR1_94/Docs/R1-1808570.zip> [retrieved on 20181205]
- NTT DOCOMO, INC.: "Enhanced UL transmission with configured grant for URLLC[ online", 3GPP TSG RAN WG1 #94BIS R1-1811380, 29 September 2018 (2018-09-29), XP051518784, Retrieved from the Internet <URL:http://www.3gpp.org/ftp/tsg_ran/WG1_RL1/TSGR1_94b/Docs/R1-1811380.zip> [retrieved on 20181205]

## Description

### Technical Field

The present disclosure relates to a user terminal and a radio communication method in a next-generation mobile communication system.

### Background Art

In a universal mobile telecommunications system (UMTS) network, Long Term Evolution (LTE) has been specified for the purpose of further increasing a data rate, providing low latency, and the like (see Non-Patent Literature 1). LTE-Advanced (third generation partnership project (3GPP) Rel. (Release) 10 to 14) has been specified for the purpose of further increasing capacity and sophistication of LTE (3GPP Rel. 8 and 9).

Successor systems of LTE (for example, also referred to as 5th generation mobile communication system (5G), 5G+ (plus), new radio (NR), or 3GPP Rel. 15 or later) are also being studied. Non-Patent Literature 2 and 3 relate to discussions regarding configured grant configurations.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010
Non-Patent Literature 2: INTEL CORPORATION: "3GPP TSG RAN WG1 Meeting #94; R1-1808707; Enhancements to configured grant PUSCH", 3GPP DRAFT; R1-1808707 INTEL - CG_PUSCH_ENH, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Gothenburg, Sweden; 20180820 - 20180824 11 August 2018
Non-Patent Literature 3: NOKIA ET AL: "3GPP TSG RAN WG1 Meeting #94; R1-1808570; On Configured Grant enhancements for NR URLLC", 3GPP DRAFT; R1-1808570_NR_URLLC_CONFIGUREDGRANTS_FINAL, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG1, no. Gothenburg, Sweden; 20180820 - 20180824 10 August 2018

### Summary of Invention

### Technical Problem

In future radio communication systems (for example, NR), scheduling using a dynamic grant and scheduling using a configured grant are being considered. It is also studied that UE is configured with a plurality of configured grants (multi configured grant) in one cell.

However, when the plurality of configured grants are configured, which configured grant the UE uses has not been studied yet. When an appropriate configured grant is not used, there is a possibility that a system performance deteriorates.

Therefore, an object of the present disclosure is to provide a user terminal that operates appropriately even when the plurality of configured grants are configured.

### Solution to Problem

The subject-matter of the independent claims solves the above technical problem/s. The dependent claims describe further preferred embodiments. A user terminal according to an aspect of the present disclosure includes a control section that determines at least one of a plurality of configured grant configurations based on at least one of a type of traffic and traffic occurrence timing, and a transmission section that performs transmission by using the determined configured grant configuration.

### Advantageous Effects of Invention

According to the aspect of the present disclosure, the UE can operate appropriately even when the plurality of configured grants are configured.

### Brief Description of Drawings

Fig. 1 is a diagram illustrating an example of an independent plurality of CG configurations.
Fig. 2 is a diagram illustrating an example of a plurality of CG configurations having a common parameter.
Figs. 3A and 3B are diagrams illustrating an example of a plurality of type 2 CG configurations.
Figs. 4A and 4B are diagrams illustrating an example of an activation/deactivation MAC CE for a CG configuration.
Figs. 5A and 5B are diagrams illustrating an example of CG confirmation MAC CE.
Fig. 6 is a diagram illustrating an example of a schematic configuration of a radio communication system according to an embodiment.
Fig. 7 is a diagram illustrating an example of a configuration of a base station according to an embodiment.
Fig. 8 is a diagram illustrating an example of a configuration of a user terminal according to an embodiment.
Fig. 9 is a diagram illustrating an example of a hardware configuration of the base station and the user terminal according to an embodiment.

### Description of Embodiments

### <Dynamic grant-based transmission and configured grant-based transmission (type 1, and type 2)>

Dynamic grant-based transmission and configured grant-based transmission are being studied for UL transmission of NR.

The dynamic grant-based transmission is a method of performing UL transmission by using an uplink shared channel (for example, physical uplink shared channel (PUSCH)) based on a dynamic UL grant (dynamic grant).

The configured grant-based transmission is a method of performing UL transmission by using an uplink shared channel (for example, PUSCH) based on the UL grant configured by a higher layer (for example, referred to as configured grant, configured UL grant or the like). In the configured grant-based transmission, UL resource is already allocated to UE, and the UE can voluntarily perform UL transmission using the configured resource, and thus low latency communication can be expected to be implemented.

The dynamic grant-based transmission may be referred to as dynamic grant-based PUSCH, UL transmission with dynamic grant, PUSCH with dynamic grant, UL transmission with UL grant, UL grant-based transmission, UL transmission scheduled (of which transmission resource is configured) by dynamic grant, or the like.

The configured grant-based transmission may be referred to as configured grant-based PUSCH, UL transmission with configured grant, PUSCH with configured grant, UL Transmission without UL grant, UL grant-free transmission, UL transmission scheduled (of which transmission resource is configured) by configured grant, or the like.

The configured grant-based transmission may be defined as one type of UL semi-persistent scheduling (SPS). In the present disclosure, "configured grant" may be read as "SPS", "SPS/configured grant", and the like.

Several types (type 1, type 2, and the like) are being studied for the configured grant-based transmission.

In configured grant type 1 transmission (type 1 configured grant), parameters used for the configured grant-based transmission (which may also be referred to as configured grant-based transmission parameter, configured grant parameter, or the like) are configured for the UE by using only higher layer signaling.

In configured grant type 2 transmission (type 2 configured grant), configured grant parameters are configured for the UE by higher layer signaling. In the configured grant type 2 transmission, at least some of the configured grant parameters are notified to the UE by physical layer signaling (for example, downlink control information (DCI) for activation, which will be described later) .

Here, the higher layer signaling may be, for example, any of radio resource control (RRC) signaling, medium access control (MAC) signaling, or broadcast information, or a combination thereof.

For the MAC signaling, for example, a MAC control element (MAC CE), a MAC PDU (protocol data unit), and the like may be used. The broadcast information may be, for example, a master information block (MIB), a system information block (SIB), remaining minimum system information (RMSI), other system information (OSI), and the like.

The configured grant parameter may be configured for the UE by using a ConfiguredGrantConfig information element of RRC. The configured grant parameter may include information specifying a configured grant resource, for example. The configured grant parameter may include information related to, for example, an index of the configured grant, a time offset, periodicity, the number of repetition transmissions of a transport block (TB) (the number of repetition transmissions may be represented by K), a redundancy version (RV) sequence used in the repetition transmissions, the above-mentioned timer, and the like.

Here, each of the periodicity and the time offset may be represented in units of symbols, slots, subframes, frames, or the like. The periodicity may be indicated by, for example, the given number of symbols. The time offset may be indicated by, for example, an offset with respect to the timing of a given index (slot number = 0 and/or system frame number = 0). The number of repetition transmissions may be an arbitrary integer, for example, 1, 2, 4, 8, and the like. When the number of repetition transmissions is n (>0), the UE may perform configured grant-based PUSCH transmission of a given TB by using n times of transmission occasions.

The UE may determine that one or more configured grants have been triggered when the configured grant type 1 transmission is configured. The UE may perform PUSCH transmission without dynamic grant by using the configured resource for configured grant-based transmission (which may be referred to as a configured grant resource, a transmission occasion, or the like). Even when the configured grant-based transmission is configured, the UE may skip the configured grant-based transmission when there is no data in a transmission buffer.

When the configured grant type 2 transmission is configured and a given activation signal is notified, the UE may determine that one or more configured grants have been triggered (or activated). The given activation signal (for example, activation DCI) may be a cyclic redundancy check (CRC) scrambled DCI (PDCCH) with a predetermined identifier (for example, configured scheduling RNTI (CS-RNTI)). The DCI may be used for control such as deactivation and retransmission of the configured grant.

The UE may determine whether or not to perform PUSCH transmission using the configured grant resource configured by the higher layer based on the given activation signal. The UE may release (which may be referred to as deactivate or the like) the resource (PUSCH) corresponding to the configured grant on the basis of the DCI that deactivates the configured grant or the expiration (elapse of a given time) of a given timer.

The UE may perform PUSCH transmission without a dynamic grant by using an activated resource for configured grant-based transmission (which may be referred to as a configured grant resource, a transmission occasion, or the like). Note that, even when the configured grant-based transmission is activated (in an active state), the UE may skip the configured grant-based transmission when there is no data in a transmission buffer.

Note that, each of the dynamic grant and the configured grant may be referred to as an actual UL grant. That is, the actual UL grant may be higher layer signaling (for example, ConfiguredGrantConfig information element of RRC), physical layer signaling (for example, the above-described given activation signal), or a combination thereof.

By the way, a plurality of configured grants may be configured in one cell or in one bandwidth part (BWP) for the UE, and the UE may be in a state in which the plurality of configured grants are triggered (or activated) in a certain period.

However, it is not clear how to configure the plurality of configured grants and how to notify activation/deactivation for the plurality of configured grants.

Therefore, the inventors of the present invention have conceived of a method of operating appropriately even when the plurality of configured grants are configured.

Hereinafter, embodiments according to the present disclosure will be described in detail with reference to the drawings. The radio communication method according to each of the embodiments may be applied independently, or may be applied in combination thereof.

Hereinafter, "configured grant" may be replaced with "configuration of configured grants", and "configured grant configuration". "Determining a configured grant for performing configured grant-based transmission" may be simply referred to as "selecting a configured grant". "Traffic" may be replaced with at least one of "data", "UL data", and "transport block".

Hereinafter, "carrier" may be replaced with "cell" and "component carrier (CC)".

The following embodiments mainly describe examples applied to UL, but may be applied to DL. For example, the operation of a type 2 configured grant (or type 3 configured grant) can also be applied to PDSCH (SPS PDSCH, downlink SPS). "Configured grant configuration (ConfiguredGrantConfig)" may be replaced with "SPS configuration (SPS-Config)". "Transmitting configured grant PUSCH" may be replaced with "receiving SPS PDSCH".

### (Radio Communication Method)

### (Aspect 1)

More than one configured grant (CG) configurations may be configured for the UE in a given BWP or carrier. The UE is notified of the CG configuration by the higher layer signaling (for example, RRC signaling).

When the plurality of CG configurations (type 1) are configurated, or when the plurality of CG configurations (type 2) are activated, the UE may select one of the plurality of CG configurations, and may use the selected CG configurations to transmit PUSCH.

The UE may report the number of CG configurations that can be configured to a base station in advance as terminal capability information. The UE may assume that the number of CG configurations configured in BWP or a carrier does not exceed a given value or a value reported to the base station as terminal capability information.

The UE may operate according to one of the following aspects 1-1 and 1-2.

### <Aspect 1-1>

In one BWP or one carrier, more than one CG configurations may be configured (notified) for one of the type 1 CG and the type 2 CG for the UE. In one BWP or one carrier, it may be expected that both the type 1 CG and the type 2 CG (different types of CG configurations) are not configured for the UE. In one BWP or one carrier, it may be expected that both the type 1 CG and the type 2 CG (different types of CG configurations) are not activated for the UE.

The UE may operate according to one of the following aspects 1-1-1 and 1-1-2.

### <Aspect 1-1-1>

In a given BWP or carrier, a parameter value in a plurality of CG configurations may be independent. The UE may independently receive configured information for each of the plurality of CG configurations in the given BWP or carrier.

There may be no restriction to parameters in the CG configurations among the plurality of CG configurations. That is, parameters for configuring repetition factor K, modulation and coding scheme (MCS) table, transformation precoding (discrete Fourier transform (DFT) precoding, discrete Fourier transform-spread-OFDM (DFT-s-OFDM)), and resource allocation (resource allocation type of frequency domain resource allocation, resource block group granularity and actual resource allocation, time domain resource allocation) for each CG configuration may be different from each other among the plurality of CG configurations.

A different logical channel may be mapped to a different CG configuration. Logical channel mapping rules (priority) may differ among the plurality of CG configurations. The logical channel may include, for example, at least one of a dedicated traffic channel (DTCH), a dedicated control channel (DCCH), a common control channel (CCCH), a paging control channel (PCCH), and a broadcast control channel (BCCH). When reliability, latency, or the like are different among the plurality of CG configurations, the UE can use the CG configurations suitable for the logical channel.

A different CG configuration may correspond to a different traffic type. The traffic type may be at least one of a communication requirement (requirement such as latency and error rate), a data type (voice, data, and the like), and a parameter used for transmission (MCS table, RNTI, and the like). The traffic type may be V2X, URLLC, eMMB, voice (voice communication), and the like. Different traffic types may be identified by a higher layer or the like. According to this, the UE can use the different CG resource for transmission of the different traffic type. When reliability and latency are different among the plurality of CG configurations, the UE can use the CG configurations suitable for the traffic type.

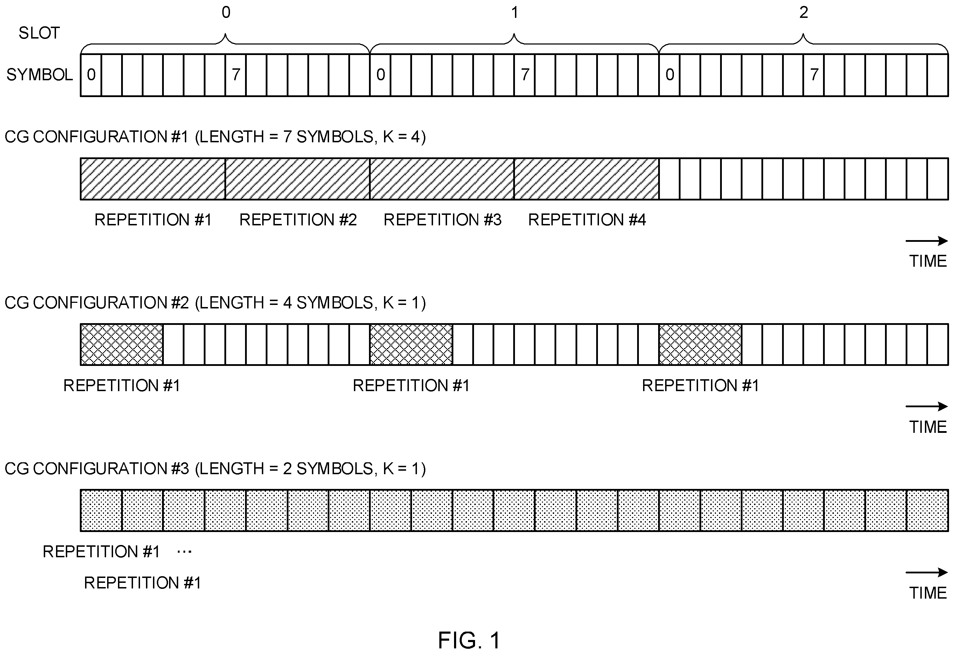

In the example of Fig. 1, CG configurations #1 to #3 are configured for the UE in one BWP or one carrier. In the CG configuration #1, a length is 7 symbols, and a repetition factor K is 4 (transmission of repetition #1 to repetition #4). In the CG configuration #2, a length is 4 symbols, a repetition factor K is 1 (transmission of repetition #1), and periodicity is 14 symbols. In the CG configuration #3, a length is 2 symbols, a repetition factor K is 1 (transmission of repetition #1), and periodicity is 2 symbols.

The CG configuration #1 may be used for a traffic type such as voice which requires high reliability but not low latency. The CG configuration #3 may be used for a traffic type which requires low latency but not high reliability. The CG configuration #2 may be used for a traffic type which does not require extremely high values for reliability and latency.

According to the aspect 1-1-1, the plurality of CG configurations can be flexibly configured.

### <Aspect 1-1-2>

In a given BWP or carrier, a parameter value of at least one of the plurality of CG configurations may be common. A common parameter for a plurality of CGs (common CG configuration) and a dedicated parameter for each CG (dedicated CG configuration) are configured for the UE in a given BWP or carrier. The UE may be notified of the common parameter by the higher layer signaling (for example, RRC signaling). The UE may be notified of the dedicated parameter by the higher layer signaling (for example, RRC signaling), or by DCI or MAC CE.

The common parameter may be repetition factor K, MCS table, transformation precoding, and resource allocation (resource allocation type of frequency domain resource allocation, resource block group granularity and actual resource allocation, time domain resource allocation), and the like.

Logical channel mapping rules may be common among the plurality of CG configurations.

Repetition with several starting positions may be configured by a plurality of CG configurations for the UE. That is, the plurality of CG configurations with at least the common parameters and different offsets (time offset, transmission start timing, and transmission occasion) are configured for the UE.

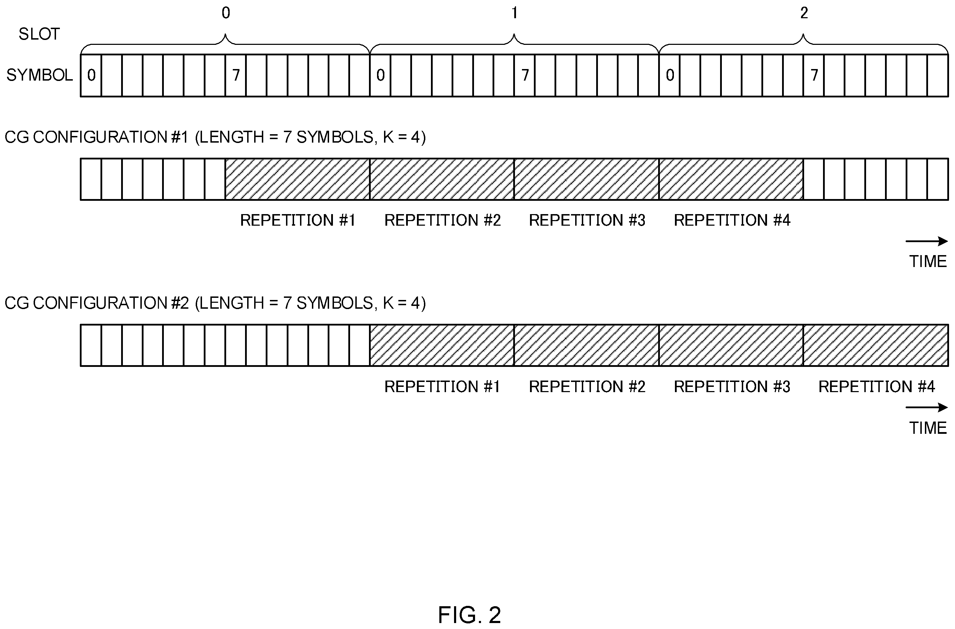

In the example of Fig. 2, CG configurations #1 to #2 are configured for the UE in one BWP or carrier. In the common parameters of the CG configurations #1 and #2, a length is 7 symbols, and a repetition factor K is 4 (transmission of repetition #1 to repetition #4). The common parameters of the CG configurations #1 and #2 may include the same time domain resource allocation. In a slot, the time domain resource allocation may include a parameter that gives at least one of a starting symbol of PUSCH and the number of symbols to which PUSCH is mapped. In the dedicated parameter of the CG configuration #1, an offset is 7 symbols. In the dedicated parameter of the CG configuration #2, an offset is 14 symbols. When the CG configurations #1 and #2 are type 2 CG, the CG configurations #1 and #2 are activated for the UE.

When UL data (traffic) is generated, the UE transmits the UL data by using the CG configuration that can be transmitted earliest among the plurality of CG configurations. In the example of Fig. 2, when UL data is generated within the period of symbols #0 to #7 in slot #0 (or when data transmission is ready), the UE transmits the UL data by using the CG configuration #1. When UL data is generated within the period of symbols #8 to #14 in slot #0 (or when data transmission is ready), the UE transmits the UL data by using the CG configuration #2.

In this way, the plurality of CG configurations with different transmission start timings are configured for the UE, and the CG configuration according to a UL data generation timing is used (selected), thereby suppressing latency from the generation of the UL data to transmission of the UL data. In one CG configuration, even when reliability can be improved by repetition, the periodicity of the CG transmission cannot be shorter than a repetition time length. On the other hand, according to the example of Fig. 2, it is possible to suppress latency equivalent to making the periodicity of the CG transmission shorter than the repetition time length while improving the reliability by repetition.

According to the aspect 1-1-2, a part of the plurality of CG configurations is configured in common, thereby being capable of reducing signaling overhead.

According to the aspect 1-1, the UE can appropriately transmit PUSCH even when the plurality of CG configurations, which are in any one of type 1 CG and type 2 CG, are configured.

### <Aspect 1-2>

For the UE, more than one CG configurations are configured (notified) for both type 1 CG and type 2 CG in one BWP or one carrier. Both the type 1 CG and the type 2 CG may be configured for the UE in one BWP or one carrier. Both the type 1 CG and the type 2 CG are activated for the UE in one BWP or one carrier.

The UE may operate according to one of the following aspects 1-2-1 and 1-2-2.

### <Aspect 1-2-1>

Similar to the aspect 1-1-1, in a given BWP or carrier, a parameter in a plurality of CG configurations may be independent. A plurality of CG configurations may be independently configured for the UE in a given BWP or carrier.

According to the aspect 1-2-1, the plurality of CG configurations can be flexibly configured.

### <Aspect 1-2-2>

Similar to the aspect 1-1-2, in a given BWP or carrier, at least one parameter in the plurality of CG configurations may be common. Common parameters of the plurality of CGs and dedicated parameter of each CG may be configured for the UE in a given BWP or carrier.

According to the aspect 1-2-2, a part of the plurality of CG configurations is configured in common, thereby being capable of reducing signaling overhead.

According to the aspect 1-2, the UE can appropriately transmit PUSCH even when the plurality of CG configurations including type 1 CG and type 2 CG, are configured.

### (Aspect 2)

DCI with CRC scrambled by a specific radio network temporary identifier (RNTI) activates or deactivates more than one type 2 CG configurations in a given BWP or carrier. The UE receives the DCI with CRC scrambled by a specific RNTI in a given BWP or carrier, the DCI activating or deactivating one or more type 2 CG configurations. The specific RNTI may be a configured scheduling (CS)-RNTI.

The UE may receive DCI that activates a type 2 CG configuration according to one of the following aspects 2-1 and 2-2.

### <Aspect 2-1>

Each DCI (activation DCI) may activate one type 2 CG configuration. The UE may receive DCI that activates one type 2 CG configuration.

The UE may be explicitly notified of which type 2 CG configuration is activated. A specific DCI field in the activation DCI may explicitly instruct which type 2 CG configuration is activated. The specific DCI field may be an existing DCI field or a new DCI field. The UE may reinterpret the existing DCI field. For example, the specific DCI field may be lower (or upper) x bits of an HARQ process number (HPN) field or lower (or upper) x bits of a redundancy version (RV) field. x may be 1 or 2, or 3 or more.

The UE may be implicitly notified of which type 2 CG configuration is activated. Each of plurality of type 2 CG configurations (configuration IDs) may be associated with an RNTI (specific RNTI). The UE may recognize that type 2 CG corresponding to the RNTI that scrambles CRC of the activation DCI is activated. Each of plurality of type 2 CG configurations (configuration IDs) may be associated with a search space configuration. The UE may recognize that type 2 CG configuration corresponding to the search space configuration in which the activation DCI was detected is activated.

The UE and NW (network, for example, base station) may follow one of the following options 1, 1a, and 2.

### <<Option 1>>

The UE may receive a plurality of activation DCIs for a different type 2 configuration in one BWP in a serving cell.

### <<Option 1a>>

Under restriction, the UE may receive a plurality of activation DCIs for a different type 2 configuration in one BWP in a serving cell. The restriction may be at least one of that a plurality of type 2 CG configurations have different transmission start timings and that a transport block size (TBS) of a plurality of type 2 CG configurations does not exceed a given threshold.

### <<Option 2>>

The UE may expect not to receive a plurality of activation DCIs for a different type 2 configuration in one BWP in a serving cell.

According to the aspect 2-1, it is preferable that the aspect 2-1 is combined with the aforementioned aspect 1-1-1 or aspect 1-2-1 (independent parameter is configured for each CS configuration for UE) since one DCI activates one of the plurality of type 2 CG configurations. According to the combination thereof, the plurality of type 2 CG configurations can be flexibly configured.

### <Aspect 2-2>

Each DCI (activation DCI) may activate one set of type 2 CG configurations. One DCI may activate one set of the type 2 CG configurations. The UE may receive DCI that activates one set of the type 2 CG configurations.

The plurality of type 2 CG configurations in the one set may have common parameters.

For the set of the type 2 CG configurations, an offset from activation DCI to transmission start timing may be the same or different in the type 2 CG configuration. One specific field in the activation DCI may indicate one offset which is the same, or different offsets for the plurality of type 2 CGs.

The specific field may indicate an offset for the first type 2 CG configuration in the set. For n> 1, the offset for the n type 2 CG configuration may have a fixed gap (difference) compared to the n-1st type 2 CG configuration. The gap may be configured by RRC signaling or may be derived from time resource allocation information, or information such as slot length and repetition factor in the type 2 CG configuration. For example, when m is k or less and k is a repetition number, the length may be specified as one or m transmission occasions.

A plurality of fields in the activation DCI may instruct each offset for the plurality of type 2 CG configurations.

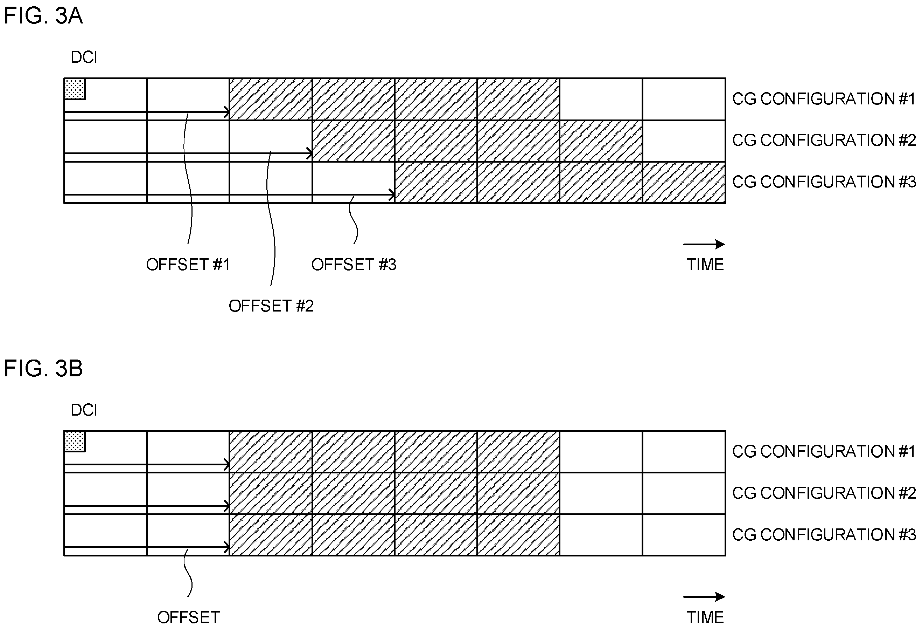

As illustrated in Fig. 3A, the UE may receive one activation DCI that activates a plurality of type 2 CG configurations. For the UE, different offsets #1 to #3 are configured for a plurality of type 2 CG configurations #1 to #3 by the activation DCI.

After the plurality of type 2 CGs are activated, the UE may transmit UL data by using CG configuration that can transmit the UL data earliest among the plurality of type 2 CG configurations depending on generation of the UL data (traffic) or a transmission ready state of the UL data. In the example of Fig. 3, when UL data is generated within the period before a resource of CG configuration #1 (period of offset #1) (or when data transmission is ready), the UE transmits the UL data by using the CG configuration #1. When UL data is generated within the period before a resource of CG configuration #2 after a start of the resource of the CG configuration #1 (period of offset #2 after offset #1) (or when data transmission is ready), the UE transmits the UL data by using the CG configuration #1. When UL data is generated within the period before a resource of CG configuration #3 after a start of the resource of the CG configuration #2 (period of offset #3 after offset #2) (or when data transmission is ready), the UE transmits the UL data by using the CG configuration #2.

In this way, the plurality of CG configurations with different transmission start timings are configured for the UE, and the CG configuration according to a UL data generation timing is used (selected), thereby suppressing latency from the generation of the UL data to transmission of the UL data. Therefore, latency can be reduced regardless of a traffic occurrence timing.

In one CG configuration, even when reliability can be improved by repetition, the periodicity of the CG transmission cannot be shorter than a repetition time length. On the other hand, according to the example of Fig. 3A, it is possible to suppress latency equivalent to making the periodicity of the CG transmission shorter than the repetition time length while improving the reliability by repetition.

As illustrated in Fig. 3B, the UE may receive one activation DCI that activates a plurality of type 2 CG configurations #1 to #3. For the UE, the same offset may be configured for a plurality of type 2 CG configurations by a common parameter or the activation DCI. For the UE, different frequency domain resource allocation is configured for the plurality of type 2 CG configurations with a dedicated parameter.

The plurality of type 2 CG configurations may include the same time domain allocation and different frequency domain allocation. The UE may select one CG configuration among the active CG configurations. When some of the activated plurality of CG configurations are canceled, the UE may select one CG configuration among the uncancelled CG configurations. The UE may select a CG configuration corresponding to the minimum value or maximum value of the ID or frequency of the CG configuration among the plurality of CG configurations. By using one of the plurality of CG configurations, the UE can reduce the probability that all resources cannot be used due to collisions with other communications.

The UE and NW may follow one of the following options 1, 1a, and 2.

### <<Option 1>>

The UE may receive a plurality of activation DCIs for a different set of the type 2 configurations in one BWP in a serving cell.

### <<Option 1a>>

Under restriction, the UE may receive a plurality of activation DCIs for a different set of type 2 configurations in one BWP in the serving cell. The restriction may be at least one of that a different set of type 2 configurations have a different transmission start timing and that a transport block size (TBS) of a different set of type 2 configurations does not exceed a given threshold.

### <<Option 2>>

It may be expected that the UE does not receive a plurality of activation DCIs for a different set of type 2 configurations in one BWP in a serving cell.

According to the aspect 2-2, it is preferable that the aspect 2-2 is combined with the aforementioned aspect 1-1-2 or aspect 1-2-2 (common parameter is configured for a plurality of CS configurations for UE) since one DCI activates a set of the type 2 CG configurations. According to the combination thereof, signaling overhead can be reduced.

The UE may receive DCI that deactivates a type 2 CG configuration according to one of the following aspects 2-3 and 2-4.

### <Aspect 2-3>

Each DCI (deactivation DCI) may deactivate one type 2 CG configuration. The UE may receive DCI that deactivates one type 2 CG configuration.

The UE may be explicitly notified of which type 2 CG configuration is deactivated. A specific DCI field in the deactivation DCI may explicitly instruct which type 2 CG configuration is deactivated. The specific DCI field may be an existing DCI field or a new DCI field. The UE may reinterpret the existing DCI field. For example, the specific DCI field may be lower (or upper) x bits of a HPN field or lower (or upper) x bits of an RV field. x may be 1 or 2, or 3 or more.

The UE may be implicitly notified of which type 2 CG configuration is deactivated. Each of plurality of type 2 CG configurations (configuration IDs) may be associated with an RNTI (specific RNTI). The UE may recognize that type 2 CG corresponding to the RNTI that scrambles CRC of the deactivation DCI is deactivated. Each of plurality of type 2 CG configurations (configuration IDs) may be associated with a search space configuration. The UE may recognize that type 2 CG configuration corresponding to the search space configuration in which the deactivation DCI was detected is deactivated.

According to the aspect 2-3, it is preferable that the aspect 2-3 is combined with the aforementioned aspect 1-1-1 or at least one of the aspect 1-2-1, and the aspect 2-1 since one DCI deactivates one of the plurality of type 2 CG configurations. According to the combination thereof, the plurality of type 2 CG configurations can be flexibly configured.

### <Aspect 2-4>

Each DCI (activation DCI) may deactivate one set of type 2 CG configurations. One DCI may deactivate one set of the type 2 CG configurations. The UE may receive DCI that deactivates one set of the type 2 CG configurations.

According to the aspect 2-4, it is preferable that the aspect 2-4 is combined with at least one of the aforementioned aspect 1-1-2 or the aspect 1-2-2, and the aspect 2-2 since one DCI deactivates a set of the type 2 CG configurations. According to the combination thereof, signaling overhead can be reduced.

### <Aspect 2-5>

The UE may be instructed to activate or deactivate a plurality of type 2 CG configurations by MAC CE. The UE may identify the MAC CE by a MAC protocol data unit (PDU) subheader having a logical channel identifier (LCID).

MAC CE for activation or deactivation of the type 2 CG configuration may include an index of the type 2 CG configuration, a BWP ID, a serving cell ID, and the like that are activated or deactivated.

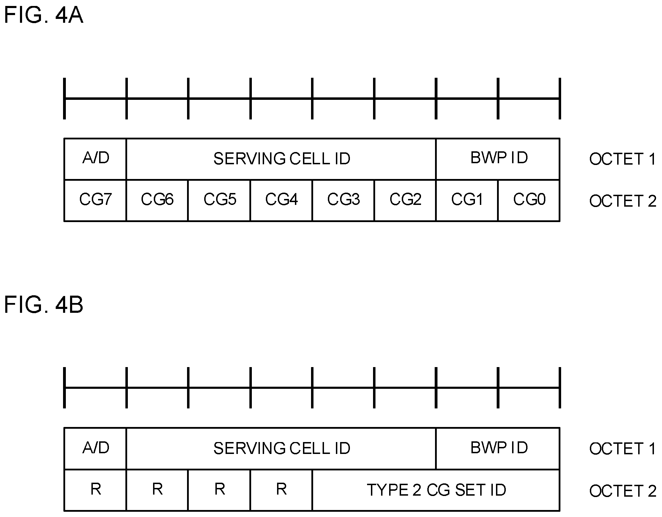

In the example of Fig. 4A, the activation/deactivation MAC CE for the type 2 CG configuration includes information (A/D) indicating which one of activation and deactivation the MAC CE instructs, and information indicating CG configuration to be activated or deactivated in the serving cell ID, the BWP ID and CG0 to CG7. The UE that received the MAC CE may recognize that CG configuration corresponding to a bit set to 1 among 8 bits of CG0 to CG7 is activated or deactivated.

In the example of Fig. 4B, the activation/deactivation MAC CE for the type 2 CG configuration includes information (A/D) indicating which one of activation and deactivation the MAC CE is instructed, and information indicating a serving cell ID, a BWP ID, a reserved bit (R), and a set of target type 2 CG configurations (type 2 CG set ID). The UE that received the MAC CE may recognize that a CG configuration included in a set corresponding to the type 2 CG set ID is activated or deactivated.

An order and size of each field are not limited to the example in this drawing. This MAC CE may not include an A/D field. In this case, the UE may recognize that a bit "1" in CG0 to CG7 or a CG configuration indicated by the type 2 CG set ID is activated, and when all "0" in CG0 to CG7 or the type 2 CG set ID is an invalid value (value different from the configured type 2 CG set ID), the UE may recognize that an active CG configuration is deactivated.

After the activation by the MAC CE, the UE may transmit PUSCH on a resource based on the activated type 2 CG configuration.

To distinguish the type 2 CG configuration that is activated or deactivated by DCI, the CG configuration that is activated or deactivated by the MAC CE may be referred to as type 3 CG configuration.

The UE may use HARQ-ACK as a delivery confirmation (ACK) of the activation/deactivation MAC CE.

In Rel.15, the UE may transmit a CG confirmation MAC CE as a delivery confirmation for the DCI of activation or deactivation of the type 2 CG. When activating or deactivating a plurality of type 2 CGs over a plurality of CCs, NW needs to ensure that there is no confusion as to which CG the received CG confirmation MAC CE corresponds to. The CG confirmation MAC CE is identified by a MAC PDU having an LCID. The CG confirmation MAC CE has a zero bit having fixed size.

The UE may transmit one confirmation MAC CE for one type 2 CG configuration.

The UE may use the CG confirmation MAC CE having a new LCID. The CG confirmation MAC CE may include a serving cell ID, a BWP ID, and a CG ID. One CG confirmation MAC CE may confirm one CG configuration. One CG confirmation MAC CE may confirm a plurality of CG configurations.

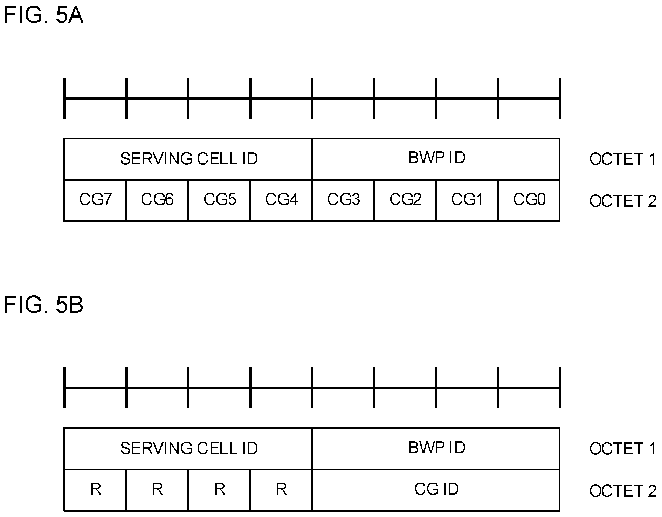

In the example of Fig. 5A, the CG confirmation MAC CE includes information indicating a serving cell ID, a BWP ID, and a target CG configuration among CG0 to CG7. The UE may transmit a delivery confirmation (ACK) of the CG configuration by setting a bit of CG configuration, which is a target of the received activation/deactivation MAC CE among CG0 to CG7, to 1.

In the example of Fig. 5B, the CG confirmation MAC CE includes information (CG ID) indicating a serving cell ID, a BWP ID, and a target CG configuration. The UE may transmit a delivery confirmation (ACK) of the CG configuration by transmitting a target CG ID of the received activation/deactivation MAC CE.

Note that, an order and size of each field are not limited to the example in this drawing.

According to the aspect 2-5, the UE and the NW can specify the target CG configuration by activating or deactivating the type 2 CG configuration (type 3 CG configuration) by using the MAC CE. The UE transmits a delivery confirmation of the activation/deactivation MAC CE. According to this, the NW and the UE can combine recognitions of activation and deactivation of the type 2 CG configuration, and transmission and reception are appropriately performed based on the type 2 CG configuration.

### (Radio Communication System)

A configuration of a radio communication system according to an embodiment of the present disclosure is described below. In the radio communication system, communication is performed using one or a combination of radio communication methods according to the embodiments of the present disclosure.

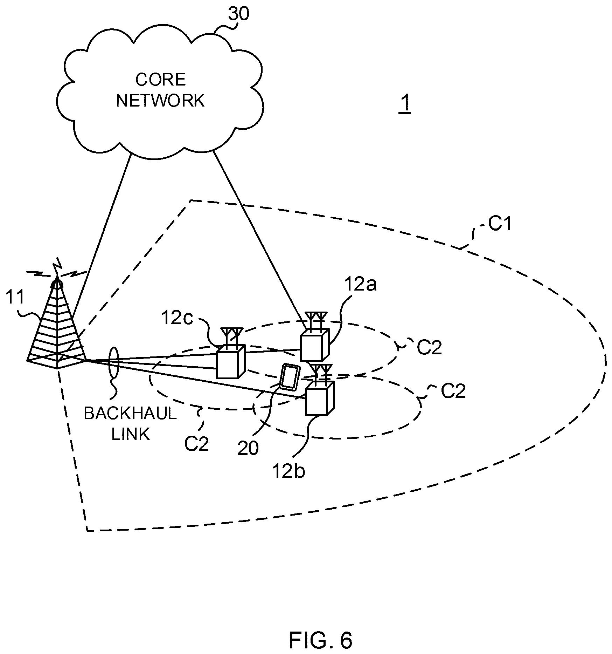

Fig. 6 is a diagram illustrating an example of a schematic configuration of a radio communication system according to an embodiment. A radio communication system 1 may be a system that implements communication using long term evolution (LTE), 5th generation mobile communication system new radio (5G NR), and the like specified by third generation partnership project (3GPP).

The radio communication system 1 may support dual connectivity (multi-RAT dual connectivity (MR-DC)) between a plurality of radio access technologies (RATs). MR-DC may include dual connectivity (E-UTRA-NR dual connectivity (EN-DC)) between LTE (evolved universal terrestrial radio access (E-UTRA)) and NR, dual connectivity (NR-E-UTRA dual connectivity (NE-DC)) between NR and LTE, and the like.

In EN-DC, an LTE (E-UTRA) base station (eNB) is a master node (MN), and an NR base station (gNB) is a secondary node (SN). In NE-DC, an NR base station (gNB) is MN, and an LTE (E-UTRA) base station (eNB) is SN.

The radio communication system 1 may support dual connectivity between a plurality of base stations in identical RAT (for example, dual connectivity in which both MN and SN are NR base stations (gNB) (NR-NR dual connectivity (NN-DC)).

The radio communication system 1 may include a base station 11 that forms a macro cell C1 with a relatively wide coverage, and base stations 12 (12a to 12c) that are disposed within the macro cell C1 and form small cells C2 narrower than the macro cell C1. A user terminal 20 may be located in at least one cell. The arrangement and number of the cells and the user terminals 20 are not limited to the aspects illustrated in the drawings. Hereinafter, the base stations 11 and 12 will be collectively referred to as base stations 10, unless the base stations 11 and 12 are distinguished from each other.

The user terminal 20 may be connected to at least one of a plurality of base stations 10. The user terminal 20 may use at least one of carrier aggregation (CA) using a plurality of component carriers (CC) and dual connectivity (DC).

Each CC may be included in at least one of a frequency range 1 (FR1) and a frequency range 2 (FR2). The macro cell C1 may be included in FR1, and the small cell C2 may be included in FR2. For example, the FR1 may be a frequency range of 6 GHz or less (sub-6 GHz), and the FR2 may be a frequency range higher than 24 GHz (above-24 GHz). The frequency ranges, definitions, and the like of the FR1 and the FR2 are not limited to these, and for example, the FR1 may be a frequency range higher than the FR2.

The user terminal 20 may perform communication using at least one of time division duplex (TDD) and frequency division duplex (FDD) in each CC.

A plurality of the base stations 10 may be connected by wire (for example, an optical fiber or an X2 interface in compliance with common public radio interface (CPRI)) or wirelessly (for example, NR communication). For example, when NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of evolved packet core (EPC), 5G core network (5GCN), next generation core (NGC), and the like.

The user terminal 20 may correspond to at least one of communication methods such as LTE, LTE-A, and 5G.

In the radio communication system 1, a radio access method based on orthogonal frequency division multiplexing (OFDM) may be used. For example, in at least one of downlink (DL) and uplink (UL), cyclic prefix OFDM (CP-OFDM), discrete fourier transform spread OFDM (DFT-s-OFDM), orthogonal frequency division multiple access (OFDMA), single carrier frequency division multiple access (SC-FDMA), and the like may be used.

The radio access method may be referred to as a waveform. In the radio communication system 1, another radio access method (for example, another single carrier transmission method or another multi-carrier transmission method) may be used as a UL and DL radio access method.

In the radio communication system 1, as a downlink channel, a physical downlink shared channel (PDSCH) shared by each of the user terminals 20, a physical broadcast channel (PBCH), a physical downlink control channel (PDCCH), and the like may be used.

In the radio communication system 1, as an uplink channel, a physical uplink shared channel (PUSCH) shared by each of the user terminals 20, a physical uplink control channel (PUCCH), a physical random access channel (PRACH), and the like may be used.

User data, higher layer control information and a system information block (SIB), and the like are transmitted on PDSCH. User data, higher layer control information, and the like may be transmitted on PUSCH. A master information block (MIB) may be transmitted on PBCH.

Lower layer control information may be transmitted on PDCCH. The lower layer control information may include, for example, downlink control information (DCI) including scheduling information of at least one of PDSCH and PUSCH.

DCI that schedules PDSCH may be referred to as DL assignment, DL DCI, and the like, and DCI that schedules PUSCH may be referred to as UL grant, UL DCI, and the like. PDSCH may be replaced with DL data, and PUSCH may be replaced with UL data.

A control resource set (CORESET) and a search space may be used to detect PDCCH. CORESET corresponds to a resource that searches for DCI. The search space corresponds to a search area and a search method for PDCCH candidates. One CORESET may be associated with one or more search spaces. The UE may monitor CORESET associated with a certain search space based on search space configuration.

One SS may correspond to a PDCCH candidate corresponding to one or more aggregation levels. One or more search spaces may be referred to as a search space set. The "search space", the "search space set", the "search space configuration", the "search space set configuration", the "CORESET", the "CORESET configuration", and the like in the present disclosure may be replaced with each other.

Channel state information (CSI), delivery confirmation information (for example, hybrid automatic repeat request acknowledgement (HARQ-ACK), which may be referred to as ACK/NACK or the like), scheduling request (SR), and the like may be transmitted on PUCCH. A random access preamble for establishing a connection with a cell may be transmitted on PRACH.

In the present disclosure, downlink, uplink, and the like may be expressed without "link". Various channels may be expressed without adding "physical" at the beginning thereof.

In the radio communication system 1, a synchronization signal (SS), a downlink reference signal (DL-RS), and the like may be transmitted. In the radio communication systems 1, a cell-specific reference signal (CRS), a channel state information reference signal (CSI-RS), a demodulation reference signal (DMRS), a positioning reference signal (PRS), a phase tracking reference signal (PTRS), and the like may be transmitted as DL-RS.

The synchronization signal may be, for example, at least one of a primary synchronization signal (PSS) and a secondary synchronization signal (SSS). A signal block including SS (PSS or SSS) and PBCH (and DMRS for PBCH) may be referred to as an SS/PBCH block, an SSB (SS Block), and the like. SS, SSB, and the like may also be referred to as a reference signal.

In the radio communication system 1, a sounding reference signal (SRS), a demodulation reference signal (DMRS), and the like may be transmitted as an uplink reference signal (UL-RS). DMRS may be referred to as a "UE-specific Reference Signal."

### (Base Station)

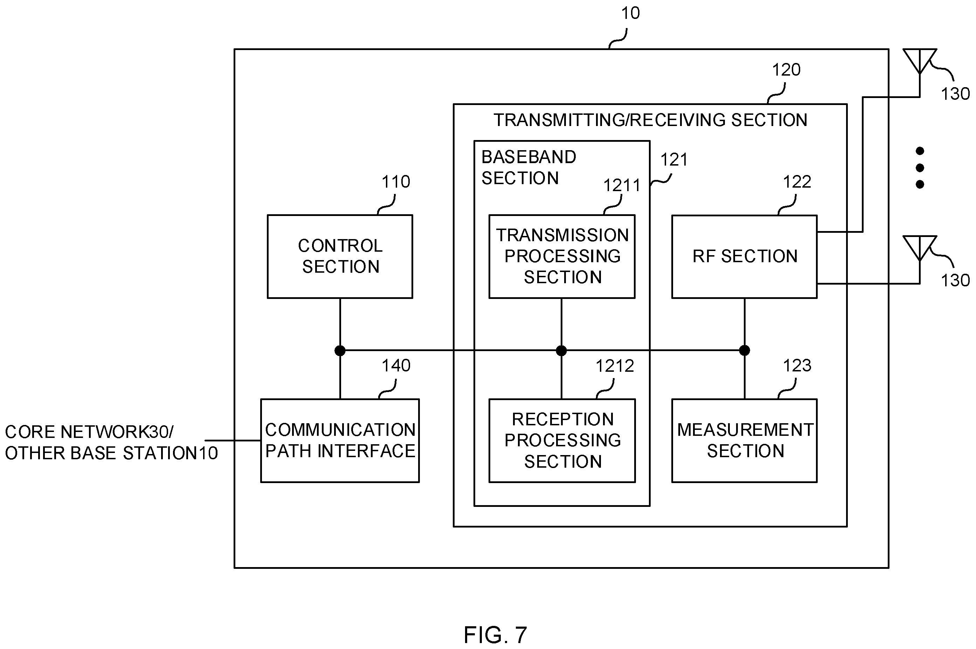

Fig. 7 is a diagram illustrating an example of a configuration of a base station according to an embodiment. The base station 10 includes a control section 110, a transmitting/receiving section 120, a transmitting/receiving antenna 130, and a communication path interface 140. One or more control sections 110, one or more transmitting/receiving sections 120, one or more transmitting/receiving antennas 130, and one or more communication path interfaces 140 may be included.

Although this example mainly illustrates functional blocks of characteristic parts of the present embodiment, it may be assumed that the base station 10 has other functional blocks that are necessary for radio communication as well. A part of processing of each section that will be described below may be omitted.

The control section 110 controls the entire base station 10. The control section 110 can be constituted by a controller, a control circuit, or the like which are described based on common recognition in the technical field according to the present disclosure.

The control section 110 may control signal generation, scheduling (for example, resource allocation or mapping), and the like. The control section 110 may control transmission/reception, measurement, and the like using the transmitting/receiving section 120, the transmitting/receiving antenna 130, and the communication path interface 140. The control section 110 may generate data to be transmitted as a signal, control information, a sequence, and the like, and may transmit the data, the control information, the sequence, and the like to the transmitting/receiving section 120. The control section 110 may perform call processing (such as configuration or releasing) of a communication channel, a state management of the base station 10, a management of a radio resource, and the like.

The transmitting/receiving section 120 may include a base band section 121, a radio frequency (RF) section 122, and a measurement section 123. The base band section 121 may include a transmission processing section 1211 and a reception processing section 1212. The transmitting/receiving section 120 can be constituted by a transmitter/receiver, an RF circuit, a base band circuit, a filter, a phase shifter, a measurement circuit, a transmitting/receiving circuit, which are described based on common recognition in the technical field according to the present disclosure.

The transmitting/receiving section 120 may be constituted as an integrated transmitting/receiving section, or may be constituted by a transmission section and a reception section. The transmission section may be constituted by the transmission processing section 1211 and the RF section 122. The reception section may be constituted by the reception processing section 1212, the RF section 122, and the measurement section 123.

The transmitting/receiving antenna 130 can be constituted by an antenna described based on common recognition in the technical field according to the present disclosure, for example, an array antenna.

The transmitting/receiving section 120 may transmit the above-described downlink channel, synchronization signal, downlink reference signal, and the like. The transmitting/receiving section 120 may receive the above-described uplink channel, uplink reference signal, and the like.

The transmitting/receiving section 120 may form at least one of a transmission beam and a reception beam by using digital beam forming (for example, precoding), analog beam forming (for example, phase rotation), and the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, for example, on data acquired from the control section 110 or control information to generate a bit string to be transmitted.

The transmitting/receiving section 120 (transmission processing section 1211) may perform transmission processing such as channel encoding (which may include error correction encoding), modulation, mapping, filtering processing, discrete fourier transform (DFT) processing (if necessary), inverse fast fourier transform (IFFT) processing, precoding, or digital-analog transform on the bit string to be transmitted, and may output a base band signal.

The transmitting/receiving section 120 (RF section 122) may perform modulation to a radio frequency range, filtering processing, amplification, and the like on the base band signal, and may transmit a signal in the radio frequency range via the transmitting/receiving antenna 130.

On the other hand, the transmitting/receiving section 120 (RF section 122) may perform amplification, filtering processing, demodulation to a base band signal, and the like on a signal in the radio frequency range received by the transmitting/receiving antenna 130.

The transmitting/receiving section 120 (reception processing section 1212) may apply reception processing such as analog-digital transform, fast fourier transform (FFT) processing, inverse discrete fourier transform (IDFT) processing (if necessary), filtering processing, demapping, demodulation, decoding (which may include error correction decoding), MAC layer processing, RLC layer processing, and PDCP layer processing to the acquired base band signal to acquire user data and the like.

The transmitting/receiving section 120 (measurement section 123) may perform measurement on the received signal. For example, the measurement section 123 may perform radio resource management (RRM) measurement, channel state information (CSI) measurement, and the like based on the received signal. The measurement section 123 may measure a received power (for example, reference signal received power (RSRP)), received quality (for example, reference signal received quality (RSRQ), signal to interference plus noise ratio (SINR), or signal to noise ratio (SNR)), signal strength (for example, received signal strength indicator (RSSI)), propagation path information (for example, CSI), and the like. The measurement result may be output to the control section 110.

The communication path interface 140 may transmit and receive a signal (backhaul signaling) to and from an apparatus included in the core network 30, other base stations 10, and the like, and may acquire and transmit user data (user plane data), control plane data, and the like for the user terminal 20.

The transmission section and the reception section of the base station 10 in the present disclosure may be constituted by at least one of the transmitting/receiving section 120, the transmitting/receiving antenna 130, and the communication path interface 140.

The transmitting/receiving section 120 may transmit a plurality of configured grant configurations to the user terminal 20 by higher layer signaling. The transmitting/receiving section 120 may transmit downlink control information or MAC CE for activation or deactivation of the configured grant configuration.

### (User terminal)

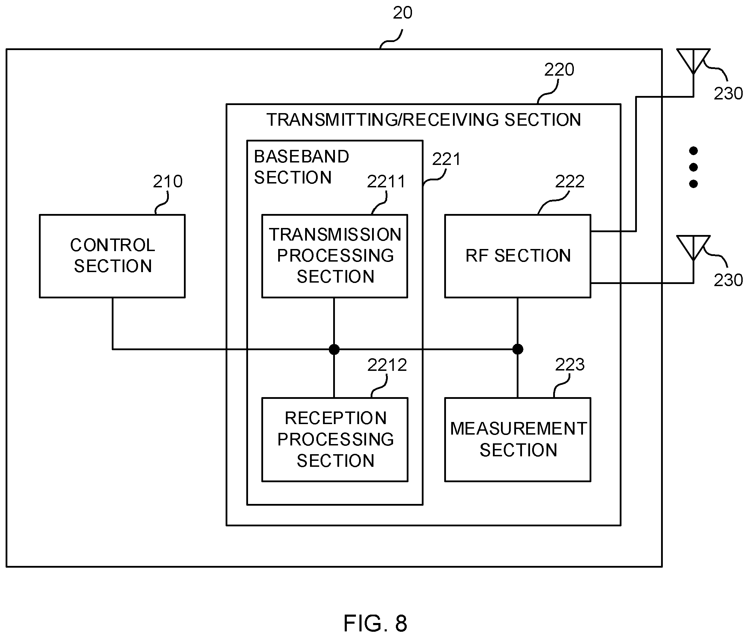

Fig. 8 is a diagram illustrating an example of a configuration of a user terminal according to an embodiment. The user terminal 20 includes a control section 210, a transmitting/receiving section 220, and a transmitting/receiving antenna 230. One or more control sections 210, one or more transmitting/receiving sections 220, and one or more transmitting/receiving antennas 230 may be included.

Although this example mainly illustrates functional blocks of characteristic parts of the present embodiment, it may be assumed that the user terminal 20 has other functional blocks that are necessary for radio communication as well. A part of processing of each section that will be described below may be omitted.

The control section 210 controls the entire user terminal 20. The control section 210 can be constituted by a controller, and a control circuit, which are described based on common recognition in the technical field according to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data to be transmitted as a signal, control information, a sequence, and the like, and may transmit the data, the control information, the sequence, and the like to the transmitting/receiving section 220.

The transmitting/receiving section 220 may include a base band section 221, an RF section 222, and a measurement section 223. The base band section 221 may include a transmission processing section 2211 and a reception processing section 2212. The transmitting/receiving section 220 can be constituted by a transmitter/receiver, an RF circuit, a base band circuit, a filter, a phase shifter, a measurement circuit, a transmitting/receiving circuit, and the like, which are described based on common recognition in the technical field according to the present disclosure.

The transmitting/receiving section 220 may be constituted as an integrated transmitting/receiving section, or may be constituted by a transmission section and a reception section. The transmission section may be constituted by the transmission processing section 2211 and the RF section 222. The reception section may be constituted by the reception processing section 2212, the RF section 222, and the measurement section 223.

The transmitting/receiving antenna 230 can be constituted by an antenna described based on common recognition in the technical field according to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like, for example, on data acquired from the control section 210 or control information to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog transform on a bit string to be transmitted, and may output a base band signal.

Whether or not to apply DFT processing may be determined based on configuration of transform precoding. When transform precoding is enabled for a channel (for example, PUSCH), the transmitting/receiving section 220 (transmission processing section 2211) may perform DFT processing as the transmission processing in order to transmit the channel using a DFT-s-OFDM waveform. When transform precoding is not enabled for a channel (for example, PUSCH), the transmitting/receiving section 220 (transmission processing section 2211) may not perform DFT processing as the transmission processing.

The transmitting/receiving section 220 (RF section 222) may perform modulation to a radio frequency range, filtering processing, amplification, and the like on the base band signal, and may transmit a signal in the radio frequency range via the transmitting/receiving antenna 230.

On the other hand, the transmitting/receiving section 220 (RF section 222) may perform amplification, filtering processing, demodulation to a base band signal, and the like on the signal in the radio frequency range received by the transmitting/receiving antenna 230.

The transmitting/receiving section 220 (reception processing section 2212) may acquire user data and the like by applying reception processing such as analog-digital transform, FFT processing, IDFT processing (if necessary), filtering processing, demapping, demodulation, decoding (which may include error correction decoding), MAC layer processing, RLC layer processing, and PDCP layer processing to the acquired base band signal.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

The transmission section and the reception section of the user terminal 20 in the present disclosure may be constituted by at least one of the transmitting/receiving section 220, the transmitting/receiving antenna 230, and the communication path interface 240.

The control section 210 may determine at least one of a plurality of configured grant configurations based on at least one of a type of traffic (traffic type, logical channel, and the like) and a traffic occurrence timing. The transmitting/receiving section 220 may perform transmission using the determined configured grant configuration.

The plurality of configured grant configurations may not include different types (for example, type 1 CG, type 2 CG, type 3 CG, and the like) of configured grant configurations (Aspect 1-1).

The plurality of configured grant configurations may include different types of configured grant configurations (Aspect 1-2).

Each of the plurality of configured grant configurations indicates a type 2 configured grant, and the control section 210 may recognize activation or deactivation of one configured grant configuration based on one downlink control information (DCI) (Aspects 2-1 and 2-3).

Each of the plurality of configured grant configurations indicates a type 2 configured grant, and the control section 210 may recognize activation or deactivation of the plurality of configured grant configurations based on one downlink control information (Aspects 2-2 and 2-4).

### (Hardware Configuration)

The block diagrams that have been used to describe the above embodiments illustrate blocks in functional units. These functional blocks (configuration sections) may be implemented in an arbitrary combination of at least one of hardware and software. A method for implementing each functional block is not particularly limited. That is, each functional block may be implemented by one device physically or logically aggregated, or may be implemented by directly or indirectly connecting two or more physically or logically separated devices (for example, by wire or wirelessly) and using a plurality of these devices. The functional block may be implemented by combining the one device or the plurality of devices with software.

Here, the functions include determination, decision, judging, calculation, computation, processing, derivation, investigation, search, confirmation, reception, transmission, output, access, solution, selection, choosing, establishment, comparison, assumption, expectation, deeming, broadcasting, notifying, communicating, forwarding, configuring, reconfiguring, allocating, mapping, assigning, and the like, but are not limited to these. For example, a functional block (configuration section) that causes transmission to function may be referred to as a transmission section, a transmitter, and the like. In any case, as described above, the implementation method is not particularly limited.

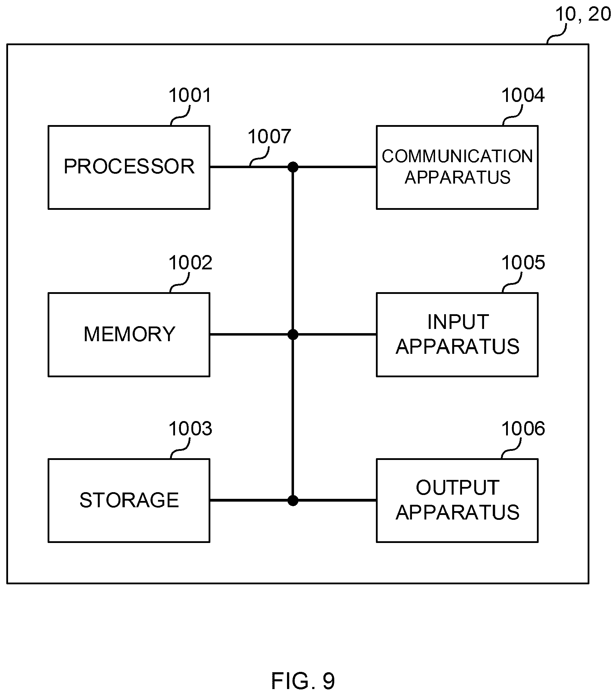

For example, the base station, the user terminal, and the like according to an embodiment of the present disclosure may function as a computer that executes the processing of the radio communication method of the present disclosure. Fig. 9 is a diagram illustrating an example of a hardware configuration of the base station and the user terminal according to an embodiment. Physically, the above-described base station 10 and user terminal 20 may be constituted as a computer apparatus that includes a processor 1001, a memory 1002, a storage 1003, a communication device 1004, an input device 1005, an output device 1006, a bus 1007, and the like.

In the present disclosure, the terms such as an apparatus, a circuit, a device, a section, or a unit can be replaced with each other. The hardware configuration of the base station 10 and the user terminal 20 may be constituted to include one or more of each of the apparatuses illustrated in the drawings, or may be constituted not to include some apparatuses.

For example, although only one processor 1001 is illustrated, a plurality of processors may be provided. Processing may be executed by one processor, or processing may be executed by two or more processors simultaneously, sequentially, or in different manners. The processor 1001 may be implemented by one or more chips.

The processor 1001 performs an operation by reading given software (program) on hardware such as the processor 1001 and the memory 1002 to control communication via the communication device 1004 and to control at least one of reading and writing data in the memory 1002 and the storage 1003, thereby implementing each function of the base station 10 and the user terminal 20.

The processor 1001 may control the entire computer by, for example, running an operating system. The processor 1001 may be constituted by a central processing unit (CPU) including an interface with peripheral equipment, a control device, an operation device, a register, and the like. For example, at least a part of the above-described control section 110 (210), transmitting/receiving section 120 (220), and the like may be implemented by the processor 1001.

The processor 1001 reads programs (program codes), software modules, data, and the like from at least one of the storage 1003 or the communication device 1004 into the memory 1002, and executes various processing according to these. As the program, a program causing a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may be constituted by, for example, at least one of a read only memory (ROM), an erasable programmable ROM (EPROM), an electrically EPROM (EEPROM), a random access memory (RAM) and other appropriate storage media. The memory 1002 may be referred to as a register, a cache, a main memory (main storage device), and the like. The memory 1002 can store a program (program code), a software module, and the like, which can implement the radio communication method according to an embodiment of the present disclosure.

The storage 1003 is a computer-readable recording medium, and may be constituted by, for example, at least one of a flexible disk, a floppy (registered trademark) disk, a magneto-optical disk (for example, a compact disc (compact disc ROM (CD-ROM) and the like), a digital versatile disk, a Blu-ray (registered trademark) disk), a removable disk, a hard disk drive, a smart card, a flash memory device (for example, a card, a stick, a key drive), a magnetic stripe, a database, a server, and other appropriate storage media. The storage 1003 may be referred to as an auxiliary storage device.

The communication device 1004 is hardware (transmitting/receiving device) for performing communication between the computers via at least one of a wired network and a wireless network, and for example, is referred to as a network device, a network controller, a network card, a communication module, and the like. The communication device 1004 may be constituted to include a high frequency switch, a duplexer, a filter, a frequency synthesizer, and the like in order to implement, for example, at least one of frequency division duplex (FDD) and time division duplex (TDD). For example, the transmitting/receiving section 120 (220), the transmitting/receiving antenna 130 (230), and the like described above may be implemented by the communication device 1004. The transmitting/receiving section 120 (220) may be implemented by being physically or logically separated into the transmission section 120a (220a) and the reception section 120b (220b).

The input device 1005 is an input device that receives input from the outside (for example, a keyboard, a mouse, a microphone, a switch, a button, a sensor, and the like). The output device 1006 is an output device that performs output to the outside (for example, a display, a speaker, a light emitting diode (LED) lamp, and the like). The input device 1005 and the output device 1006 may be integrally provided (for example, a touch panel).

Devices such as the processor 1001 and the memory 1002 are connected with each other by the bus 1007 so as to communicate information. The bus 1007 may be formed with a single bus, or may be formed with different buses for the devices.

The base station 10 and the user terminal 20 may be constituted to include hardware such as a microprocessor, a digital signal processor (DSP), an application specific integrated circuit (ASIC), a programmable logic device (PLD), a field programmable gate array (FPGA), and the like, and a part or all of the functional blocks may be implemented by the hardware. For example, the processor 1001 may be implemented by at least one of these hardwares.

### (Modification Example)

Terms described in the present disclosure and terms necessary for understanding the present disclosure may be replaced with other terms that have the same or similar meanings. For example, a channel, a symbol, and a signal (or signaling) may be replaced with each other. The signal may be a message. A reference signal can be abbreviated as "RS", and may be referred to as a pilot, a pilot signal, and the like according to a standard to be applied. A component carrier (CC) may be referred to as a cell, a frequency carrier, a carrier frequency, and the like.

A radio frame may be formed with one or more periods (frames) in the time domain. Each of one or more periods (frames) constituting the radio frame may be referred to as a subframe. Furthermore, the subframe may be formed with one or more slots in the time domain. The subframe may be a fixed time length (for example, 1 ms) that is not dependent on numerology.

Here, the numerology may be a communication parameter used for at least one of transmission and reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing to be performed by a transceiver in the frequency domain, specific windowing processing to be performed by a transceiver in the time domain, and the like.

The slot may be formed with one or more symbols (orthogonal frequency division multiplexing (OFDM) symbols, single carrier frequency division multiple access (SC-FDMA) symbols, and the like) in the time domain. The slot may be a time unit based on numerology.

The slot may include a plurality of mini slots. Each mini slot may be formed with one or more symbols in the time domain. The mini slot may be referred to as a subslot. Each mini slot may be formed with fewer symbols than that of the slot. PDSCH (or PUSCH) transmitted in a time unit larger than that of the mini slot may be referred to as PDSCH (PUSCH) mapping type A. PDSCH (or PUSCH) transmitted using the mini slot may be referred to as PDSCH (PUSCH) mapping type B.

All the radio frame, the subframe, the slot, the mini slot and the symbol represent the time unit when a signal is transmitted. A different name may be used corresponding to each of the radio frame, the subframe, the slot, the mini slot, and the symbol. The time units such as the frame, the subframe, the slot, the mini slot, and the symbol in the present disclosure may be replaced with each other.

For example, one subframe may be referred to as TTI, a plurality of consecutive subframes may be referred to as TTI, or one slot or one mini slot may be referred to as TTI. That is, at least one of the subframe and the TTI may be a subframe (1 ms) in the existing LTE, may be a period shorter than 1 ms (for example, 1 to 13 symbols), or may be a period longer than 1 ms. The unit to represent the TTI may be referred to as a slot, a mini slot, and the like, instead of the subframe.

Here, for example, the TTI refers to a minimum time unit of scheduling in the radio communication. For example, in LTE system, the base station performs scheduling to allocate radio resources (such as the frequency bandwidth and transmit power that can be used in each user terminal) to each user terminal in a TTI unit. The definition of the TTI is not limited to this.

The TTI may be a transmission time unit of a channel-encoded data packet (transport block), a code block, a codeword and the like, or may be a unit of processing of scheduling, link adaptation, and the like. When TTI is given, a time interval (for example, the number of symbols) in which the transport block, the code block, the codeword, and the like are actually mapped may be shorter than the TTI.

When one slot or one mini slot is referred to as TTI, one or more TTIs (that is, one or more slots or one or more mini slots) may be a minimum time unit of scheduling. The number of slots (the number of mini slots) that constitute the minimum time unit of the scheduling may be controlled.

TTI having a time length of 1 ms may be referred to as usual TTI (TTI in 3GPP Rel. 8 to 12), normal TTI, long TTI, a usual subframe, a normal subframe, a long subframe, a slot, and the like. TTI that is shorter than the usual TTI may be referred to as shortened TTI, short TTI, partial TTI (or fractional TTI), a shortened subframe, a short subframe, a mini slot, a subslot, a slot, and the like.

Long TTI (for example, usual TTI, a subframe, and the like) may be replaced with TTI having a time length exceeding 1 ms, and short TTI (for example, shortened TTI) may be replaced with TTI having a TTI length less than the TTI length of long TTI and equal to or longer than 1 ms.

A resource block (RB) is a unit of resource allocation in time domain and frequency domain, and may include one or more consecutive subcarriers in the frequency domain. The number of subcarriers included in the RB may be the same regardless of the numerology, and may be, for example, twelve. The number of subcarriers included in the RB may be determined based on the numerology.

The RB may include one or more symbols in the time domain, and may be one slot, one mini slot, one subframe, or one TTI in length. Each of one TTI, one subframe, and the like may be formed with one or more resource blocks.

One or more RBs may be referred to as a physical resource block (PRB (Physical RB)), a subcarrier group (SCG), a resource element group (REG), a PRB pair, an RB pair, and the like.

The resource block may be formed with one or more resource elements (REs). For example, one RE may be a radio resource domain of one subcarrier and one symbol.

The bandwidth part (BWP) (which may be referred to as partial bandwidth, and the like) may represent a subset of consecutive common RBs (common resource blocks) for a certain numerology in a certain carrier. Here, the common RB may be specified by an index of the RB based on a common reference point of the carrier. The PRB may be defined in a BWP and numbered in the BWP.

The BWP may include a BWP for UL (UL BWP) and a BWP for DL (DL BWP). For UE, one or more BWPs may be configured in one carrier.

At least one of the configured BWPs may be active, and the UE may not be assumed to transmit or receive a given signal/channel outside the active BWP. A "cell", a "carrier", and the like in the present disclosure may be replaced with "BWP".

A configuration of the above-described radio frame, subframe, slot, mini slot, symbol, and the like is merely an example. For example, a configuration of the number of subframes included in the radio frame, the number of slots per subframe or radio frame, the number of mini slots included in the slot, the number of symbols and RBs included in the slot or the mini slot, the number of subcarriers included in the RB, the number of symbols in the TTI, the symbol length, the length of cyclic prefixes (CPs), and the like can be variously changed.

Information, parameters, and the like described in the present disclosure may be represented by using absolute values, represented by using relative values with respect to given values, or represented by using other corresponding information. For example, the radio resource may be instructed by a given index.

A name used for parameters, and the like in the present disclosure is not a limited name in any respect. In addition, an equation, and the like using these parameters may differ from those explicitly disclosed in the present disclosure. Since various channels (physical uplink control channel (PUCCH), physical downlink control channel (PDCCH), and the like) and information elements can be identified by any suitable names, the various names allocated to these various channels and information elements are not limited names in any respect.

The information, the signal, and the like described in the present disclosure may be represented by using a variety of different technologies. For example, data, an instruction, a command, information, a signal, a bit, a symbol, a chip, and the like which are referenced throughout the description, may be represented by a voltage, a current, an electromagnetic wave, a magnetic field or magnetic particles, an optical field or a photon, or any combination thereof.

The information, the signal, and the like can be output at least either from higher layer to lower layer, or from lower layer to higher layer. The information, the signal, and the like may be input and output via a plurality of network nodes.

The information, the signal, and the like, which are input and output, may be stored in a specific location (for example, memory), or may be managed by using a managed table. The information, the signal, and the like, which are input and output, can be overwritten, updated, or added. The information, the signal, and the like, which are output, may be deleted. The information, the signal, and the like, which are input, may be transmitted to other devices.

The notification of information is not limited to the aspects and the embodiments, which are described in the present disclosure, and may be performed by using other methods. For example, the notification of information in the present disclosure may be performed by using physical layer signaling (for example, downlink control information (DCI), uplink control information (UCI)), higher layer signaling (for example, radio resource control (RRC) signaling, broadcast information (master information block (MIB), system information block (SIB), and the like), medium access control (MAC) signaling), other signals, or a combination thereof.

The physical layer signaling may be referred to as L1/L2 (Layer 1/Layer 2) control information (L1/L2 control signals), L1 control information (L1 control signal), and the like. The RRC signaling may be referred to as an RRC message, and may be, for example, an RRC connection setup message, an RRC connection reconfiguration message, and the like. The MAC signaling may be notified by using, for example, MAC control element (MAC CE (control element)).

Notification of given information (for example, notification of "being X") may not be limited to explicit notification, and may be performed implicitly (for example, by not notifying the given information, or by notifying other information).

Judging may be made based a value represented by one bit (0 or 1), may be made based on a boolean value represented by true or false, or may be made by comparing numerical values with each other (for example, comparison with given values).

Software has to be interpreted broadly so as to mean an instruction, an instruction set, a code, a code segment, a program code, a program, a subprogram, a software module, an application, a software application, a software package, a routine, a subroutine, an object, an executable file, an execution thread, procedures, a function, and the like regardless whether the software is referred to as software, firmware, middleware, microcode or a hardware description language, or referred to by other names.

Software, instructions, information, and the like may be transmitted and received via a transmission medium. For example, when software is transmitted from a website, a server, or other remote sources by using at least one of wired technology (coaxial cable, optical fiber cable, twisted-pair cable, digital subscriber line (DSL), and the like) and wireless technology (infrared ray, microwave, and the like), at least one of the wired technology and wireless technology is included in the definition of the transmission medium.

The terms "system" and "network" used in the present disclosure may be used interchangeably. The "network" may mean an apparatus (for example, a base station) included in the network.

In the present disclosure, terms such as "precoding", "precoder", "weight (precoding weight)", "quasi-co-location (QCL)", "transmission configuration indication state (TCI state)", "spatial relation", "spatial domain filter", "transmit power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" may be used interchangeably. The base station may be referred to as a macro cell, a small cell, a femto cell, a pico cell, and the like.

The base station can accommodate one or more (for example, three) cells. When the base station accommodates a plurality of cells, the entire coverage area of the base station can be partitioned into plural smaller areas, and each smaller area can provide a communication service through a base station subsystem (for example, indoor small base station (remote radio head (RRH))). The term "cell" or "sector" refers to all or a part of the coverage area of at least one of the base station and the base station subsystem that provides a communication service in the coverage.

In the present disclosure, the terms "mobile station (MS)", "user terminal", "user equipment (UE)", "terminal", and the like may be used interchangeably.

A mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or by some other suitable terms.

At least one of the base station and the mobile station may be referred to as a transmitting apparatus, a receiving apparatus, a radio communication apparatus, and the like. At least one of the base station and the mobile station may be a device mounted on a moving object, a moving object itself, and the like. The moving object may be a vehicle (for example, a car, an airplane, and the like), an unmanned moving object (for example, a drone, an autonomous car, and the like), or a (manned or unmanned) robot. At least one of the base station and the mobile station includes a device that does not necessarily move at the time of a communication operation. For example, at least one of the base station and the mobile station may be an Internet of Things (IoT) device such as a sensor.

The base station in the present disclosure may be replaced with the user terminal. For example, each aspect and embodiment of the present disclosure may be applied to a configuration in which communication between the base station and the user terminal is replaced with communication among a plurality of user terminals (which may be referred to as, for example, Device-to-Device (D2D), Vehicle-to-Everything (V2X), and the like). In this case, the user terminal 20 may be configured to have functions of the base station 10 described above. The wording such as "up" and "down" may be replaced with the wording corresponding to communication between terminals (for example, "side"). For example, an uplink channel and a downlink channel may be replaced with a side channel.

Similarly, the user terminal in the present disclosure may be replaced with the base station. In this case, the base station 10 may be configured to have functions of the user terminal 20 described above.

In the present disclosure, an operation described as performed by the base station may be performed by an upper node of the base station in some cases. In a network including one or more network nodes of the base station, it is clear that various operations that are performed so as to communicate with terminals can be performed by the base station, one or more network nodes (for example, mobility management entities (MMEs), serving-gateways (S-GWs), and the like are considered, but these are not limited) other than the base station, or a combination thereof.

The aspects and the embodiments described in the present disclosure may be used individually or in a combination, which may be switched depending on the execution of the aspects and the embodiments. A processing procedure, a sequence, a flowchart, and the like of the aspects and the embodiments in the present disclosure may be re-ordered as long as inconsistencies do not arise. For example, regarding the method described in the present disclosure, elements of various steps are presented using an illustrative order, and are not limited to the presented particular order.

The aspects and the embodiments described in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), Future Radio Access (FRA), New Radio Access Technology (New-RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system that uses other appropriate radio communication methods, a next generation system that are enhanced based on these, and the like. A plurality of systems may be combined and applied (for example, a combination of LTE or LTE-A and 5G, and the like).

The description of "based on" as used in the present disclosure does not mean "based only on", unless otherwise specified. In other words, the description of "based on" means both "based only on" and "based at least on."

Reference to elements with designations such as "first" and "second" used in the present disclosure does not generally limit the quantity or order of these elements. These designations may be used in the present disclosure only for convenience, as a method for distinguishing between two or more elements. In this way, reference to the first and second elements does not mean that only two elements may be employed, or that the first element has to precede the second element in some way.

The terms "determining (decision)" as used in the present disclosure may include a wide variety of operations. For example, "determining (decision)" may be interpreted to mean making a "determination (decision)" related to judging, calculating, computing, processing, deriving, investigating, searching (looking up, search, inquiry) (for example, looking up in a table, database, or another data structure), ascertaining, and the like.

The "determining (decision)" may be interpreted to mean making a "determination (decision)" related to receiving (for example, receiving information), transmitting (for example, transmitting information), inputting, outputting, accessing (for example, accessing data in a memory), and the like.

The "determining (decision)" may be interpreted to mean making a "determination (decision)" related to resolving, selecting, choosing, establishing, comparing, and the like. In other words, the "determining (decision)" may be interpreted to mean making a "determination (decision)" related to some operations.

The "determining (decision)" may be replaced with "assuming", "expecting", "considering", and the like.

The "maximum transmit power" described in the present disclosure may mean a maximum value of transmit power, nominal UE maximum transmit power, or rated UE maximum transmit power.

As used in the present disclosure, the terms "connected" and "coupled", or any variation of these terms mean all direct or indirect connections or coupling between two or more elements, and may include the presence of one or more intermediate elements between two elements that are "connected" or "coupled" to each other. The coupling or connection between the elements may be physical, logical or a combination thereof. For example, "connection" may be replaced with "access".

As used in the present disclosure, when two elements are connected, these elements may be considered to be "connected" or "coupled" to each other by using one or more electrical wires, cables, printed electrical connections, and the like, and, as some non-limiting and non-inclusive examples, by using electromagnetic energy having a wavelength in the radio frequency domain, microwave domain, and optical (both visible and invisible) domain, and the like.

In the present disclosure, the description of "A and B are different" may mean "A and B are different from each other". The description may mean that "A and B are respectively different from **C".** The terms such as "separated" and "coupled" may be interpreted as "different".

When the terms such as "include", "including", and variations of these are used in the present disclosure, these terms are intended to be inclusive, similar to the term "comprising". Furthermore, the term "or" as used in the present disclosure is intended to be not an exclusive-OR.

In the present disclosure, when articles such as an indefinite article "a" and "an", and a definite article "the" are added in English translation, the present disclosure may include a plural form of a noun that follows these articles.

Although the invention according to the present disclosure has been described in detail above, it is obvious to a person skilled in the art that the invention according to the present disclosure is not limited to the embodiments described in the present disclosure. The invention according to the present disclosure can be implemented with corrections and modifications, without departing from the scope of the invention defined by the recitations of claims. Consequently, the description of the present disclosure is provided for the purpose of exemplification and explanation, and has no limitative meaning to the invention according to the present disclosure.

## Claims

1. A terminal (20) comprising:
a control section (210) configured to determine one configured grant configuration, as configured grant configuration that transmits a physical uplink shared channel, PUSCH, among a plurality of configured grant configurations upon an occurrence of a transport block, the one configured grant configuration capable of being transmitted earliest among the plurality of configured grant configurations; and
a transmitting section (220) configured to transmit the PUSCH using the determined configured grant configuration,
wherein the plurality of configured grant configurations include a configuration of type 1 configured grant and a configuration of type 2 configured grant,
wherein the type 1 configured grant PUSCH transmission is configured by higher layer signaling and the type 2 configured grant PUSCH transmission is configured by higher layer signaling and activation downlink control information, DCI,
wherein the plurality of configured grant configurations includes a plurality of configurations of type 2 configured grant,
the control section (210) is configured to deactivate the plurality of configurations of type 2 configured grant based on one DCI, and
both the configuration of type 1 configured grant and the configuration of type 2 configured grant included in the plurality of configured grant configurations are active in one band width part, BWP.

2. A radio communication method performed by a terminal (20), the method comprising:
determining one configured grant configuration, as configured grant configuration that transmits a physical uplink shared channel, PUSCH, among a plurality of configured grant configurations upon an occurrence of a transport block, the one configured grant configuration capable of being transmitted earliest among the plurality of configured grant configurations; and
transmitting PUSCH using the determined configured grant configuration,
wherein the plurality of configured grant configurations include a type 1 configured grant configuration and a type 2 configured grant configuration,
wherein the type 1 configured grant PUSCH transmission is configured by higher layer signaling and the type 2 configured grant PUSCH transmission is configured by higher layer signaling and activation downlink control information, DCI,
wherein the plurality of configured grant configurations includes a plurality of configurations of type 2 configured grant; and
deactivating the plurality of configurations of type 2 configured grant based on one DCI, and
wherein both the configuration of type 1 configured grant and the configuration of type 2 configured grant included in the plurality of configured grant configurations are active in one band width part, BWP.

3. A system comprising a terminal (20) according to claim 1 and a base station (10),
wherein the base station (10) comprises:
a transmitting section (120) configured to transmit, to the terminal (20), information related to the plurality of configured grant configurations; and
a receiving section (120) configured to receive the PUSCH from the terminal (20).

## Patentansprüche

1. Endgerät (20), umfassend:
einen Steuerabschnitt (210), der so konfiguriert ist, dass er eine konfigurierte Gewährungskonfiguration als konfigurierte Gewährungskonfiguration bestimmt, die einen physikalischen Uplink Shared Channel, PUSCH, unter einer Vielzahl von konfigurierten Gewährungskonfigurationen bei Auftreten eines Transportblocks überträgt, wobei die eine konfigurierte Gewährungskonfiguration unter der Vielzahl von konfigurierten Gewährungskonfigurationen am frühesten übertragbar ist; und
einen Übertragungsabschnitt (220), der so konfiguriert ist, dass er den PUSCH unter Verwendung der bestimmten konfigurierten Gewährungskonfiguration überträgt,
wobei die Vielzahl von konfigurierten Gewährungskonfigurationen eine Konfiguration von konfigurierter Gewährung des Typs 1 und eine Konfiguration von konfigurierter Gewährung des Typs 2 einschließt,
wobei die konfigurierte gewährte PUSCH-Übertragung des Typs 1 durch Signalisierung einer höheren Schicht und die konfigurierte gewährte PUSCH-Übertragung des Typs 2 durch Signalisierung einer höheren Schicht und Aktivierung der Downlink-Steuerungsinformation, DCI, konfiguriert wird,
wobei die Vielzahl von konfigurierten Gewährungskonfigurationen eine Vielzahl von Konfigurationen von konfigurierter Gewährung des Typs 2 einschließt,
wobei der Steuerabschnitt (210) so konfiguriert ist, dass er die Vielzahl von Konfigurationen von konfigurierter Gewährung des Typs 2 basierend auf einer DCI deaktiviert, und
wobei sowohl die Konfiguration von konfigurierter Gewährung des Typs 1 als auch die Konfiguration von konfigurierter Gewährung des Typs 2, die in der Vielzahl von konfigurierten Gewährungskonfigurationen eingeschlossen sind, in einem Bandbreitenteil, BWP, aktiv sind.

2. Funkkommunikationsverfahren, das von einem Endgerät (20) durchgeführt wird, wobei das Verfahren Folgendes umfasst:
Bestimmen einer konfigurierten Gewährungskonfiguration als konfigurierte Gewährungskonfiguration, die einen physikalischen Uplink Shared Channel, PUSCH, unter einer Vielzahl von konfigurierten Gewährungskonfigurationen bei Auftreten eines Transportblocks überträgt, wobei die eine konfigurierte Gewährungskonfiguration unter der Vielzahl von konfigurierten Gewährungskonfigurationen am frühesten übertragbar ist; und
Übertragen des PUSCH unter Verwendung der bestimmten konfigurierten Gewährungskonfiguration,
wobei die Vielzahl von konfigurierten Gewährungskonfigurationen eine Konfiguration von konfigurierter Gewährung des Typs 1 und eine Konfiguration von konfigurierter Gewährung des Typs 2 einschließt,
wobei die konfigurierte gewährte PUSCH-Übertragung des Typs 1 durch höhere Schichtsignalisierung konfiguriert ist und die konfigurierte gewährte PUSCH-Übertragung des Typs 2 durch höhere Schichtsignalisierung und Aktivierungs-Downlink-Steuerinformationen, DCI, konfiguriert ist,
wobei die Vielzahl von konfigurierten Gewährungskonfigurationen eine Vielzahl von Konfigurationen von konfigurierter Gewährung des Typs 2 einschließt; und das Deaktivieren der Vielzahl von Konfigurationen von konfigurierter Gewährung des Typs 2 basierend auf einer DCI, und
wobei sowohl die Konfiguration von konfigurierter Gewährung des Typs 1 als auch die Konfiguration von konfigurierter Gewährung des Typs 2, die in der Vielzahl von konfigurierten Gewährungskonfigurationen eingeschlossen sind, in einem Bandbreitenteil, BWP, aktiv sind.

3. System, umfassend ein Endgerät (20) nach Anspruch 1 und eine Basisstation (10),
wobei die Basisstation (10) Folgendes umfasst:
einen Übertragungsabschnitt (120), der so konfiguriert ist, dass er dem Endgerät (20) Informationen im Zusammenhang mit der Vielzahl von konfigurierten Gewährungskonfigurationen überträgt; und
einen Empfangsabschnitt (120), der so konfiguriert ist, dass er den PUSCH von dem Endgerät (20) empfängt.

## Revendications

1. Terminal (20) comprenant :
une section de commande (210) configurée pour déterminer une configuration d'autorisation configurée, en tant que configuration d'autorisation configurée qui transmet un canal partagé de liaison montante physique, PUSCH, parmi une pluralité de configurations d'autorisation configurées lors d'une occurrence d'un bloc de transport, la configuration d'autorisation configurée pouvant être transmise la plus tôt parmi la pluralité de configurations d'autorisation configurées ; et
une section de transmission (220) configurée pour transmettre le PUSCH en utilisant la configuration d'autorisation configurée déterminée,
dans lequel la pluralité de configurations d'autorisation configurées inclut une configuration d'autorisation configurée de type 1 et une configuration d'autorisation configurée de type 2,
dans lequel la transmission PUSCH d'autorisation configurée de type 1 est configurée par signalisation de couche supérieure et la transmission PUSCH d'autorisation configurée de type 2 est configurée par signalisation de couche supérieure et activation d'informations de commande de liaison descendante, DCI,
dans lequel la pluralité de configurations d'autorisation configurées inclut une pluralité de configurations d'autorisation configurée de type 2,
la section de commande (210) est configurée pour désactiver la pluralité de configurations d'autorisation configurée de type 2 sur la base d'une DCI, et
à la fois la configuration d'autorisation configurée de type 1 et la configuration d'autorisation configurée de type 2 incluses dans la pluralité de configurations d'autorisation configurées sont actives dans une partie de bande passante, BWP.

2. Procédé de communication radio mis en œuvre par un terminal (20), le procédé comprenant :
une détermination d'une configuration d'autorisation configurée, en tant que configuration d'autorisation configurée qui transmet un canal partagé de liaison montante physique, PUSCH, parmi une pluralité de configurations d'autorisation configurées lors d'une occurrence d'un bloc de transport, la configuration d'autorisation configurée pouvant être transmise la plus tôt parmi la pluralité de configurations d'autorisation configurées ; et
une transmission du PUSCH en utilisant la configuration d'autorisation configurée déterminée,
dans lequel la pluralité de configurations d'autorisation configurées inclut une configuration d'autorisation configurée de type 1 et une configuration d'autorisation configurée de type 2,
dans lequel la transmission PUSCH d'autorisation configurée de type 1 est configurée par signalisation de couche supérieure et la transmission PUSCH d'autorisation configurée de type 2 est configurée par signalisation de couche supérieure et activation des informations de commande de liaison descendante, DCI,
dans lequel la pluralité de configurations d'autorisation configurées inclut une pluralité de configurations d'autorisation configurée de type 2 ; et une désactivation de la pluralité de configurations d'autorisation configurée de type 2 sur la base d'une DCI, et
dans lequel à la fois la configuration d'autorisation configurée de type 1 et la configuration d'autorisation configurée de type 2 incluses dans la pluralité de configurations d'autorisation configurées sont actives dans une partie de bande passante, BWP.

3. Système comprenant un terminal (20) selon la revendication 1 et une station de base (10),
dans lequel la station de base (10) comprend :
une section de transmission (120) configurée pour transmettre, au terminal (20), des informations relatives à la pluralité de configurations d'autorisation configurées ; et
une section de réception (120) configurée pour recevoir le PUSCH du terminal (20).
